# EUROPEAN PATENT APPLICATION

(11) **EP 2 924 005 A1**
(43) Date of publication of application: **30.09.2015**
(21) Application number: 13880227.7
(22) Date of filing: 21.11.2013
(51) Int. Cl.: C01B 31/04, B82Y 30/00

(54) **METHOD FOR OBTAINING SOLID GRAPHENE SAMPLES OR SUSPENSIONS**

(30) Priority: 22.11.2012 ES 201201166
(71) Applicant: Abengoa Solar New Technologies, S.A., 41014 Sevilla (ES)
(72) Inventor: PRIMO ARNAU, Ana María, E-41014 Sevilla (ES); GARCÍA GÓMEZ, Hermenegildo, E-41014 Sevilla (ES); SÁNCHEZ CORTEZÓN, Emilio, E-41014 Sevilla (ES); DELGADO SÁNCHEZ, José María, E-41014 Sevilla (ES)
(74) Representative: Garcia-Cabrerizo y del Santo, Pedro Maria
(86) International application number: PCT/ES2013/000260
(87) International publication number: WO 2014/154911

(57) **Abstract**

Method for obtaining solid samples or suspensions of graphene optionally doped with heteroatoms from synthetic or natural polymers, which are subjected to pyrolysis in a furnace without oxygen at temperatures of between 400°C and 1,200°C and subsequently to a liquid-phase exfoliation phase. The polymers used are preferably polysaccharides, such as chitosan, alginate and alginic acid, which can be optionally doped with any heteroatom. The invention is intended primarily for use in microelectronics and photovoltaic devices in which graphene sheets are very useful. In addition, the graphene prepared cn be uses as an additive for polymers and ceramic materials.

## Description

### Field of the invention

The present invention discloses an efficient method for preparing graphene suspensions, whether aqueous or in other solvents, and solid graphene samples from biopolymers without the use of chemical reagents. The graphene thus obtained may contain various proportions of one or more heteroatoms.

The present invention is intended primarily for use in microelectronics and photovoltaic devices in which graphene sheets are very useful. In addition, the graphene prepared can be used as an additive for polymers and ceramic materials.

### State of the art

Graphene suspensions in water or other solvents are used in the deposition of graphene on different surfaces or for the mixture and additivation of graphene to different materials. Additionally, these solvents can be concentrated by removing the solvent and the dry graphene residue can also be used as an additive for organic polymers, inorganic materials, for coating surfaces and other uses.

The most common precursor of graphene is graphite, which consists of the arrangement and overlapping of graphene sheets. The exfoliation or delamination of graphite leads to the formation of graphene sheets. However, the direct exfoliation of graphite is notoriously inefficient and solutions with graphene concentrations of less than 0.1 mg/ml can be obtained using ultrasound, thermal treatments or viscous solvents. Additionally, the use of liquids other than water gives rise to problems associated with the toxicity thereof or due to the high boiling points and viscosity of the solvents required in direct exfoliation, and the processes for recovering graphene from these solutions require subsequent treatments. An example of direct exfoliation of graphite is based on the use of imidazolium-based ionic liquids. Subsequently, these ionic liquids are difficult to remove due to the fact that they do not distil due to their lack of vapour pressure and immiscibility with other solvents, due to which the graphene present in this medium from the direct delamination of graphite is difficult to separate.

In the case of direct graphite exfoliation, the most usual methods for obtaining graphene inks with high concentrations are based on a three-stage process. The first stage consists of graphite oxidation in highly acid and oxidising conditions by a second stage of exfoliation of graphite oxide to produce graphene oxide. The third stage consists of the reconstitution of graphene from graphene oxide by reduction with chemical reagents such as hydrazine and hydrides or by thermal treatment at high temperatures.

The key step that enables exfoliation in this methodology is based on the oxidation of graphite to graphene oxide. A general protocol for performing this oxidation is that described by W. S. Hummers and R. E. Offeman, PREPARATION OF GRAPHITIC OXIDE, Journal of the American Chemical Society, 1958, 80, 1339-1339, which consists of treating graphite with a mixture of sulphuric and nitric acid with permanganate at a temperature lower than ambient temperature. Subsequently, the oxidation process is completed diluting the mixture of acids and carrying out oxidation with hydrogen peroxide at ambient temperature under Fenton conditions. This oxidation process generates a very high quantity of residue consisting of highly acidic aqueous solutions containing manganese species. The treatment of one gramme of graphite can produce more than one litre of these residual solutions, causing serious environmental problems when these types of processes are carried out on a large scale.

In light of the drawbacks of the methods known in the state of the art to obtain graphene or graphene suspensions, the present invention discloses a new process for obtaining aqueous or non-aqueous graphene suspensions containing heteroatoms in various proportions, where no liquid residue is generated and which, therefore, have environmental and economic advantages over processes based on oxidation-exfoliation-reconstitution. Additionally, compared with the currently known direct exfoliation processes, the process described in this specification has the advantage that it may be carried out using water, among other media, as a solvent and achieve graphene concentrations of approximately 0.15 mg/ml or higher with a degree of purity in the proportion of carbon of the solid greater than 95%. This initial purity avoids the need for carrying out expensive cleaning and purification processes, such as those carried out in the currently known direct exfoliation processes.

Moreover, the process described in this specification enables the obtainment of graphene sheets with dimensions such as average diameter of the graphene sheet or diagonals of the graphene sheet greater than those obtained in conventional processes for obtaining graphene from graphite oxidation and subsequent exfoliation and reconstitution, which generally gives rise to graphene samples of less than 5 microns and typically of approximately 2 microns.

Graphene samples with large dimensions are more adequate for applications in microelectronics, where contacts can be achieved more easily if the size of the graphene sample is greater than 10 microns.

### Description of the invention

The process of the present invention, which allows the obtainment of graphene suspensions or solid graphene samples, is based on the use of natural and synthetic polymers as starting materials, which give rise to graphitic carbons when subjected to pyrolysis without oxygen.

The process of the present invention mainly comprises the following stages:
a) pyrolysis of the starting polymer in a furnace without oxygen at temperatures between 400°C and 1,200°C; and
b) direct liquid-phase exfoliation of the pyrolyzed residue obtained in stage a) without need for previous oxidation stages, as in the case of conventional methods.

Optionally, several liquid-phase exfoliation cycles can be carried out to enhance delamination or exfoliation performance. Exfoliation performance is understood to be the percentage by weight of the pyrolyzed material which is capable of being suspended, forming a persistent colloidal suspension in the solvent in question. Persistent colloidal dispersion is understood to be a liquid phase containing particles that do not settle by terrestrial gravity for an indefinite period of time.

In order to obtain solid graphene samples, a final stage is carried out subsequent to exfoliation in which the solvent is removed and the resulting residue dried.

Of particular interest to the present invention are biopolymers and their derivatives, preferably polysaccharides which are considered agricultural waste or from biomass and which have little value but which, however, tend to give rise to easily exfoliable graphitic carbons having low crystallinity along the Z-axis.

Preferably, chitosan, alginate with any counterion, alginic acid or derivatives of these polysaccharides are used as graphene precursors in the process of the present invention. Poly(furfuryl alchohol), poly(acrylate), polythiophene, poly(p-phenylene vinylene), polyanylene, polystyrene, polyacrylonitrile, bakelite or a combination thereof are synthetic polymers that can be used in the process of the present invention to obtain graphene and their behaviour is similar to that of biopolymers. Poly(furfuryl alcohol) can be obtained from the corresponding monomer using strong acids.

As regards the exfoliation or delamination stage, it can be carried out in solvents other than water, also obtaining significant quantities of graphene suspended therein. Preferably, the solvent used for exfoliation is one, or a combination in any proportion, of the following liquids: water, methanol, acetone, ethylene glycol, propylene glycol, dimethylformamide, methylpyrrolidone, ionic liquids or supercritical fluids.

The process described may include a pre-pyrolysis stage for modifying the properties or characteristics of the starting polymer, so that a carbonaceous material is produced or a desired heteroatom is introduced in the pyrolysis stage. In general, the polymer as of which the graphene is formed may previously be subjected to a doping process wherein heteroatoms are introduced for the purpose of obtaining p- or n-type doping of the graphene. Doping pretreatments include, for example, treatment with boric acid for the introduction of doping with boron or similar treatments with sulphuric acid or other sulphur compounds and with reagents which allow the introduction of phosphorus and aluminium among other possible elements. The reagents that can be used in the doping process include metal alkoxides such as titanium isopropoxide, aluminium trietoxide and tetraetoxisilane.

Likewise, the starting polymer can be subjected to a pretreatment to increase the area thereof or give rise to a change in the texture or morphology of its particles. Therefore, a pretreatment that affects the morphology of the resulting graphene and the dimensions of the sheets is the pretreatment of polymer samples with supercritical fluids and, in particular, with supercritical CO₂.

The process of the present invention allows the obtainment of graphene sheets having dimensions between 1 and 100 microns from biopolymers.

The graphene concentrations obtained in water suspensions may vary from 0.01 mg/ml to 0.2 mg/ml.

Concentrations of 0.2 mg/ml of graphene can be obtained if water containing graphene is used instead of distilled water for exfoliation and it is subjected to a sonification process in the presence of alginate pyrolyzed at 900°C

### Description of the figures

In order to complete the description being made, the following figures have been included in an illustrative and non-limiting manner:

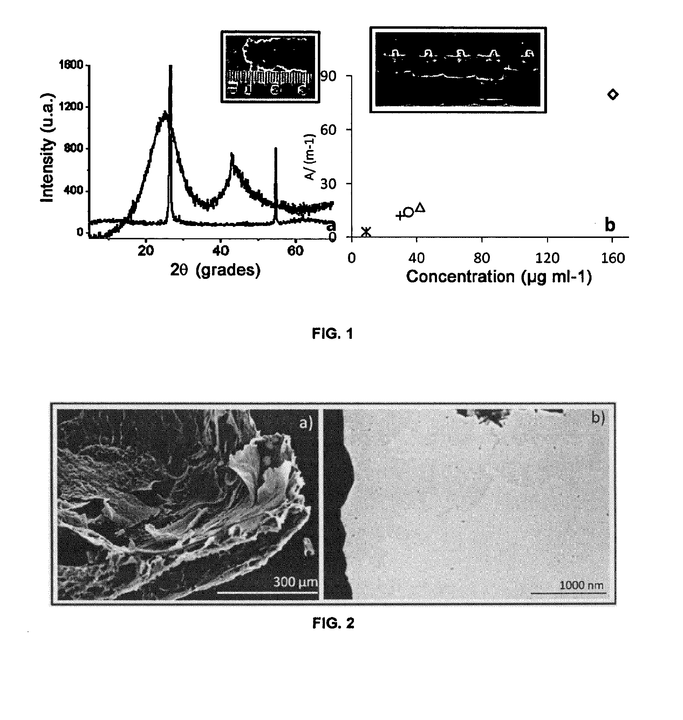

Figure 1. a) X-ray diffraction obtained for chitosan beads pyrolyzed at 900°C and which is a precursor of graphene suspensions. The box shows a photograph of the chitosan aerogel subjected to pyrolysis at 900°C; b) Absorbance (λₑₓ= 660 nm) divided by the length of the cell (A/I) in accordance with the graphene concentration in five selected solvents: □) water; Δ) ethanol; ○) tetrahydrofuran; +) acetonitrile and *) dichloromethane, and where the behaviour is shown according to the Lambert-Beer Law with a mean absorptivity coefficient of <α₆₆₀>= 2.460 L g⁻¹ m⁻¹. Box: Dispersion of graphene sheets in different solvents subsequent to centrifugation: 1) ethanol; 2) acetonitrile; 3) tetrahydrofuran; 4) dichloromethane; 5) water.
Figure 2. a) Scanning electron microscope image of chitosan beads pyrolyzed at 900°C and b) High-resolution TEM (Transmission Electron Microscopy) image of graphene monolayers deposited from a graphene-containing aqueous solution obtained by dispersion of powdered alginate pyrolyzed at 900°C.
Figure 3. a) High-resolution TEM (Transmission Electron Microscopy) image of a graphene monolayer deposited from an aqueous solution of graphene obtained by ultrasonic dispersion of powdered chitosan pyrolyzed at 900°C; b) Electron diffraction corresponding to this graphene sheet.
Figure 4. Raman spectrum of graphene monolayers deposited from an aqueous solution of powdered alginate pyrolyzed at 900°C.
Figure 5. Experimental XPS and its components obtained by deconvolution of the experimental peak recorded for graphene monolayers deposited from an aqueous solution of powdered chitosan pyrolyzed at 900°C; a) C 1 s peak and its corresponding deconvolution; b) N 1s peak and its corresponding deconvolution.
Figure 6. a) Optical microscope image corresponding to a graphene coating obtained using the process described in the present invention on a wafer of Si by immersion in an aqueous graphene suspension obtained according to the process described in the present invention from alginic acid.

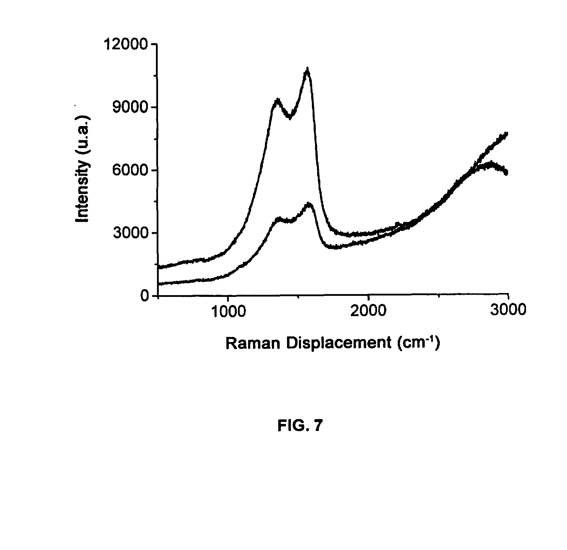

Figure 7. Raman spectra of chitosan beads subjected to pyrolysis at 900°C and exfoliation in water.

### Preferred embodiment of the invention

Two preferred examples of the process of the present invention are chitosan and alginate. Commercial chitosan samples are formed from millimetre-size crystalline particles. These particles are introduced in a furnace that can operate in a vacuum, at low pressure or in an oxygen-starved atmosphere and are conveniently pyrolyzed at a temperature of approximately 900°C. The material is transformed from white powder to carbon residue also consisting of independent millimetre-size particles. The presence of two peaks with values of 2□ of 25° and 45° is detected by means of the X-ray diffraction technique applied to the carbonaceous residue, which correspond to graphite and indicate that the initial polysaccharide has been transformed into a crystalline carbon with a graphitic structure (Figure 1 (a)). These residues or carbons resulting from chitosan pyrolysis are suspended in water and subjected to liquid-phase exfoliation processes under different conditions, including mechanical methods, physical methods, photochemical methods, ultrasound, thermal methods, etc.

If using ultrasound to perform liquid-phase exfoliation, it shall preferably be applied at 750 W for 60 minutes.

The progress of the exfoliation can be observed visually through the gradual deepening in colour of the liquid phase.

These results are surprising and cannot be inferred from the state of the art that presupposes that the exfoliation of graphite requires pre-exfoliation oxidising treatments in order to be effective. In this case, the ease of exfoliation may be due to the fact that the pyrolysis of the polymers gives rise to graphitic materials (as evidenced by X-ray diffraction) but where the packing of the graphene sheets is not perfect and said imperfections make it considerably easier to exfoliate the graphenic sheets that constitute the material in these carbonaceous residues than in conventional graphite. In other words, the pyrolysis of chitosan and, in general, of the natural or artificial polymers gives rise to materials having imperfect graphene sheet packing. In other words, the pyrolysis of chitosan and, in general, of natural or artificial polymers, gives rise to materials having imperfect packing of graphene sheets with structural defects and with a Z-axis crystallinity lower than that of graphite, due to which the delamination of these materials is, unexpectedly, considerably easy and does not require any chemical method to take place. With the indicated process consisting of the exfoliation of the graphitic carbonaceous residue derived from the polymers, concentrations of graphene in aqueous solutions are obtained comparable to or greater than those obtained using methods known in the state of the art and which are in the range of 0.2 mg/ml or less.

If, after a first exfoliation of the chitosan sample subjected to pyrolysis, the residue that settles is recovered and this residue is redispersed in distilled water, greater delamination performance is achieved. Consecutive cycles where the same pyrolyzed chitosan sample is subjected to four consecutive exfoliations give rise to an overall exfoliation performance of 90% in water. It is observed that, although the accumulated overall delamination performance increases in consecutive cycles, the liquid-phase graphene concentrations obtained are smaller than those of the first cycle. Additionally, the quality of the graphene obtained in consecutive cycles may be somewhat undermined by the presence of amorphous carbon residues.

The previously commented process consisting of pyrolysis of commercially available chitosan samples without oxygen at temperatures of approximately 1,000°C followed by exfoliation by sonification or other physical method in a solvent may also be applicable to samples of an alginate (e.g.: sodium alginate) and alginic acid or other commercially available related samples, obtaining the same results. It has even been observed that, after pyrolysis at 900°C, sodium alginate samples very easily undergo an exfoliation process in an aqueous medium, obtaining graphene concentrations even higher than those obtained with chitosan.

The exfoliation or delamination process may also be carried out in solvents other than water or supercritical media, also obtaining significant quantities of graphene suspended therein. By way of example, Table 1 indicates the quantity of graphene suspension that can be obtained in various solvents following the process described herein.

**Table 1. Concentrations of graphene in mg/ml obtained in the delamination of materials described in the present invention in different solvents.**

| Biopolymer: Alginic acid | |
|---|---|
| Solvent | Concentration (mg/ml) |
| EtOH | 0.04 |
| MeCN | 0.08 |
| THF | 0.10 |
| CH₂Cl₂ | 0.02 |
| H₂O | 0.1 |

| Biopolymer: Chitosan | |
|---|---|
| H₂O | 0.03 |
| H₂O/EtOH (2.1) | 0.032 |
| EtOH | 0.004 |
| MeCN | 0.005 |
| THF | 0.007 |
| CH₂Cl₂ | 0.032 |

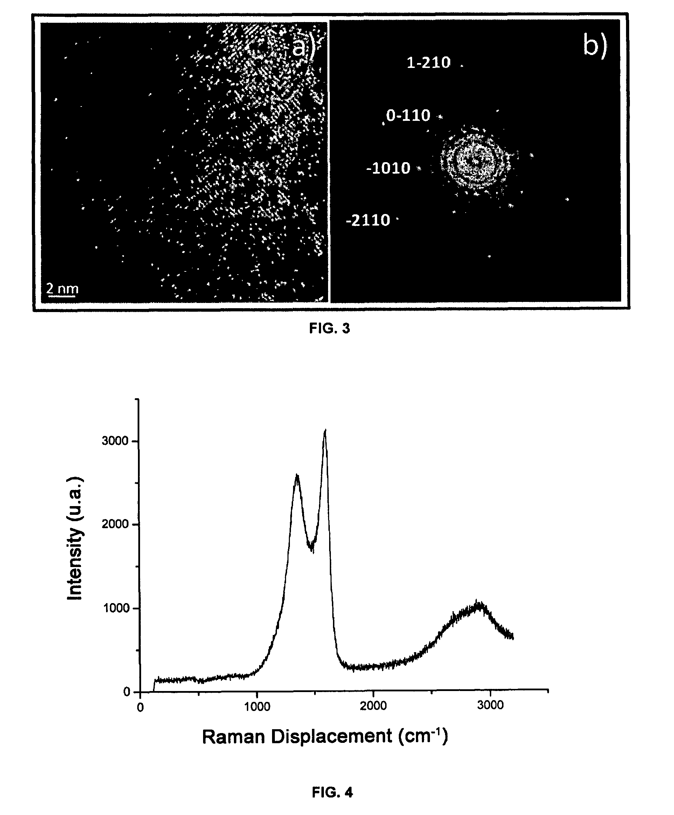

Evidence that the colloidal solutions described herein consist of graphene sheets can be obtained by means of transmission electron microscopy (Figure 2). Images obtained using this technique show the presence of graphene consisting of sheets having micron-sized (less than 100 microns) dimensions (diameter or diagonal of the graphene sheet). Moreover, high-resolution transmission electron microscopy (Figure 3 (a)) makes it possible to verify that the graphene sheets consist of an infinite succession of regular hexagons formed by condensed benzene rings. High-resolution images make it possible to observe the characteristic structure of graphene, which indicates the success of pyrolysis, wherein a graphitic carbonaceous residue is obtained from polymers, as shown by X-ray diffraction. Furthermore, the diffraction of electrons of selected areas (Figure 3 (b) ) of the microscope image shows the diffraction model corresponding to a crystalline material with a regular hexagonal arrangement.

Evidence that demonstrates the constitution of the sample by graphene monosheets is equally obtained using the AFM technique for measuring suspensions of these materials. The vertical profile of the graphene sheets deposited on mica surfaces shows that the height of these sheets is, in certain cases, less than 1 nm and in all cases less than 2 nm, which indicates that a few graphene sheets may overlap in certain particles resulting from the delamination.

Raman Spectroscopy (Figure 4) presents the two bands called G and D characteristic of graphene and which appear at 1620 and 1360 cm⁻¹, respectively. The observation of these bands suggests, together with the condensed benzene rings, that there are defects associated with the sample. These defects may be due to the carboxylic groups and other functional groups that must be present on the edges of the sheets or even in inner cavities and some areas of the sheet and which are sufficiently documented as corresponding to graphene samples.

If pretreated with supercritical CO₂, the alginate and chitosan precipitate in an aqueous solution. Millimetre-sized spherical shapes of these biopolymers or other types of shapes using the adequate moulds can be obtained from this precipitate. The alginate or chitosan beads are dehydrated by means of ethanol exchange by immersion in ethanol/water mixtures with increasing proportions of ethanol. After being dehydrated, the ethanol-containing beads are subjected to drying with supercritical CO₂. This treatment gives rise to alginate or chitosan samples in the form of aerogel with very high surface areas that can reach 600 (alginate) or 400 (chitosan) m²×g⁻¹. The pyrolysis of these aerogel spheres gives rise to a graphitic carbon that is very adequate for ultrasonic delamination to give rise to large-sized, spherical graphenes. The graphene sheets thus obtained are approximately 50 microns in size.

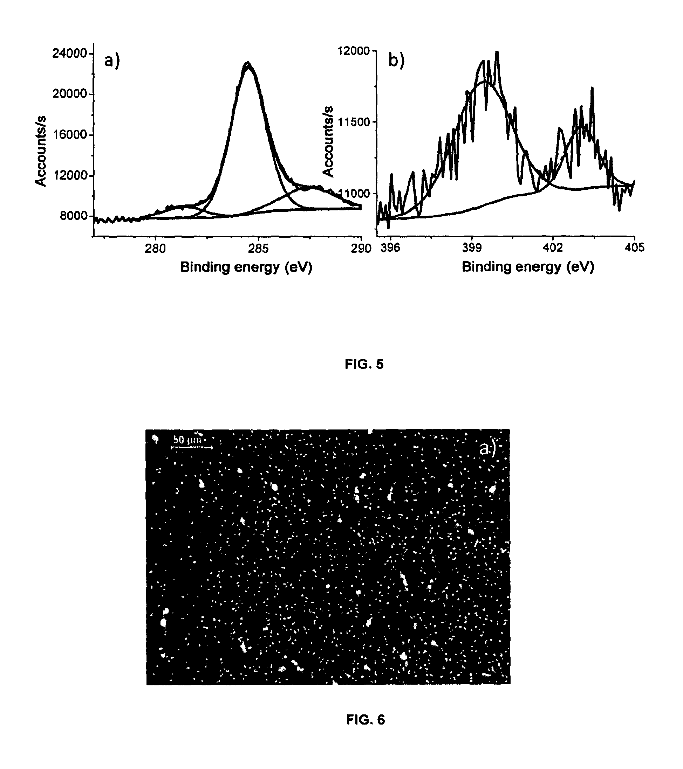

Natural chitosan contains a percentage of nitrogen of approximately 8% by weight and, after pyrolysis, the graphitised carbon samples contain nitrogen, as evidenced by combustion chemical analysis or X-ray photoelectronic spectroscopy (XPS) (Figure 5). In contrast, in the case of alginate, the resulting graphene sample only has a carbon content of up to 95%. The impregnation of the biopolymer with an adequate compound containing another heteroatom can occur by means of pretreatment. A particular example of the present invention that leads to boron-doped graphene consists of the impregnation of sodium alginate with an aqueous solution of boric acid. This impregnation is carried out by agitating the sodium alginate particles in an aqueous solution of 1 M boric acid (pH 5), for 1 hour at ambient temperature, recovering the resulting solid after impregnation by means of filtration. Alternatively, the impregnation can be performed by adding drops of a concentrated aqueous solution of boric acid on the crystalline biopolymer particles.

The pyrolysis of the material impregnated with boron or other heteroatom is carried out in the same furnace under identical conditions to those described previously, finally resulting in graphitic carbonaceous material containing the heteroatom.

The concentration of heteroatom and its presence can be revealed, as in the previous cases, using an analytical technique or spectroscopy, such as combustion analysis or XPS spectroscopy.

Other representative examples of the present invention for preparing graphene suspensions in different solvents are shown below:
*1. Preparation of aqueous graphene suspensions by pyrolysis of alginic acid.* Samples of commercial alginic acid are placed in a ceramic crucible and introduced in a furnace without pretreatment. The furnace containing the acid sample is subjected to a vacuum and progressively heated at 10°C/minutes up to 900°C, maintaining this temperature for 2 hours. After this time period has elapsed, the furnace is left to cool, the carbon residue is recovered and it is suspended in water in a proportion by weight of 1:50. The suspension is subjected to ultrasound at 750 W for 30 min. After this time period has elapsed, the residue is separated from the liquid phase, which contains graphene at a concentration of approximately 0.15 mg×ml⁻¹.
*2. Preparation of aqueous suspensions of N-doped aqueous graphene suspensions by chitosan pyrolysis.*
   The experimental process is identical to that indicated in example 1, with the difference that the sample subjected to pyrolysis is a commercial chitosan sample with no pretreatment. Colloidal graphene suspensions from chitosan are obtained in this manner. Elemental analysis of combustion of the carbonaceous residue after pyrolysis indicates that the sample has an N content of 7% by weight and coupled elemental analysis using X-ray dispersion spectroscopy (EDX) indicates that the nitrogen is evenly distributed in the sample. Analysis by X-ray photoelectron spectroscopy indicates that N has sp2 hybridisation and that it is joined to carbons in an approximate proportion of 50/50 equivalent to N of pyridine and pryridinium. The graphene concentration obtained in this case is approximately 0.03 mg/ml.
*3. Preparation of aqueous suspensions of large-sized N-doped graphene by delamination of chitosan samples* as *an aerosol obtained by drying with supercritical CO₂*. A commercial chitosan sample (250 mg) is dissolved in 1 ml of acetic acid and this solution is diluted in 50 ml of distilled water. This solution is loaded into a syringe and is introduced drop by drop in a 4 M aqueous solution of NaOH, whereupon the chitosan beads precipitate instantly.
   These beads are collected, thoroughly washed with water to eliminate salts and dehydrated by consecutive 30-minute immersions in a series of water/ethanol mixtures with the following proportions: 80/20, 60/40, 40/60, 20/80 and 0/100. The millimetre-sized sample of dehydrated and ethanol-containing chitosan beads is introduced into a supercritical drying autoclave loaded with liquid CO₂ which is heated at 40°C and 150 atm. The removal of CO₂ gives rise to 300 m²×g⁻¹ chitosan aerogel beads, which are subjected to pyrolysis under the conditions indicated in example 1.
   The suspension in water of the carbon beads resulting from the pyrolysis of the chitosan aerogel from the supercritical drying produces samples containing graphene sheets doped with N (50 microns and spherical). In this case, dimensions of 50 microns are obtained. Suspensions with concentrations greater than 0.02 mg/ml are obtained.
*4. Preparation of aqueous suspensions doped with boron.*
   A commercial sample of sodium alginate (250 mg) is dissolved in distilled water (25 ml) together with boric acid (250 mg). This solution is loaded into a syringe adding 200 ml of an aqueous solution of 0.2 M of CaCl₂, instantly forming a borated alginate precipitate. The hydrogel beads resulting from the precipitate are collected and washed with distilled water. These spheres are pyrolyzed under the conditions indicated in example 1 to produce boron-containing carbonaceous residue that is then ultrasonically delaminated to produce aqueous suspensions of boron-doped graphene.

Table 2 is shown by way of illustration and indicates the chemical analysis of some of the graphenes obtained in accordance with the process described in the present invention.

**Table 2:**

| | **N %** | **C %** | **H %** | **S %** | **B %** |
|---|---|---|---|---|---|
| **Graphene obtained by pyrolysis of chitosan at 900°C** | 6.65 | 82.70 | 0.61 | 0.24 | -- |
| **Graphene obtained by pyrolysis of alginic acid t 900°C** | 0.24 | 86.30 | 0.40 | 0.00 | -- |
| **Graphene obtained by pyrolysis of sodium alginate at 900°C** | 0.12 | 71.51 | 0.28 | 0.96 | -- |
| **Graphene obtained by pyrolysis of alginic acid treated with boric acid at 900°C.** | 0.15 | 78.40 | 0.35 | 0.00 | 2.1 |

## Claims

1. Method for obtaining solid graphene samples or suspensions from natural or synthetic polymers comprising the following stages:
a) pyrolysis of the polymer in a furnace without oxygen at temperatures between 400 and 1,200°C, and
b) liquid-phase exfoliation of the pyrolyzed residue obtained in stage a).

2. Method, according to claim 1, where it is used as precursor of a biopolymer or a derivative thereof.

3. Method, according to claim 2, where the biopolymer is an alginate with any counterion, alginic acid or a derivative thereof.

4. Method, according to claim 2, where the biopolymer is chitosan of any origin or a derivative thereof.

5. Method, according to claim 1, where the polymer is subjected to a pre-pryrolisis treatment to introduce heteroatoms resulting from p- or n-type doping of the graphene or an increase in the area of the polymer or a change in particle texture or morphology.

6. Method, according to claim 5, where the polymer is subjected to a drying pretreatment using supercritical CO₂ prior to pyrolysis.

7. Method, according to claim 5, where the polymer has been treated with boric acid prior to pyrolysis by impregnation or suspension.

8. Method, according to claim 5, where the polymer, prior to pyrolysis, has been doped with a metal alkoxide selected from among the group comprising: titanium isopropoxide, aluminium trietoxide and tetraetoxisilane.

9. Method, according to claim 1, where the solvent used for liquid-phase exfoliation is one or a combination in any proportion of the following liquids: water, methanol, acetone, ethylene glycol, propylene glyocol, dimetylformamide, diethylformamide, methylpyrrolidone, ionic liquids or supercritical fluids.

10. Method, according to claim 2, where the graphene sheets formed are between 1 and 100 microns in length.

11. Method, according to claim 11, where the graphene sheets are 50 microns in length.

12. Method, according to claim 1, where the exfoliation stage is carried out several times until dispersing 90% of the solid.

13. Method, according to claim 1, where the concentration of graphene obtained in an aqueous suspension has a concentration of between 0.01 and 0.2 mg/ml.

14. Method, according to claim 1, where the polymer is synthetic and is selected from among the group comprising: poly(furfuryl alchohol), poly(acrylate), polythiophene, poly(p-phenylene vinylene), polyanylene, polystyrene, polyacrylonitrile, bakelite or a combination thereof.

15. Method, according to claim 1, comprising a final stage of elimination of the solvent and drying of the resulting residue to obtain solid graphene.
